Europäisches Patentamt

(19) European Patent Office

Office européen des brevets

(11) Publication number: **0 460 858 A1**

## (12) EUROPEAN PATENT APPLICATION

(21) Application number: 91304852.6

(22) Date of filing: 29.05.91

(51) Int. Cl.$^5$: **C08K 5/523**, C08L 75/04, C08L 91/08, B29C 33/60, // (C08L75/04, 91:08), B29K103:00

(30) Priority: 04.06.90 GB 9012397

(43) Date of publication of application:
11.12.91 Bulletin 91/50

(84) Designated Contracting States:
AT BE CH DE DK ES FR GB GR IT LI NL SE

(71) Applicant: IMPERIAL CHEMICAL
INDUSTRIES PLC
Imperial Chemical House, Millbank
London SW1P 3JF (GB)

(72) Inventor: Yavorski, James Anthony
391 Megan Drive, Mickleton
Gloucester County, New Jersey 08056 (US)

(74) Representative: Baken, Philippus Johannes L.
H. et al
Imperial Chemical Industries PLC Legal
Department: Patents P.O. Box 6 Bessemer
Road
Welwyn Garden City Herts. AL7 1HD (GB)

(54) Mould-release compositions.

(57) Composition comprising a neutral ester of a specific orthophosphoric acid and a mineral wax. The composition may be used as an external mould release agent or may be used together with a polyisocyanate, especially for binding of ligno-cellulosic material.

EP 0 460 858 A1

This invention relates to mould-release compositions comprising a polyisocyanate and a mineral wax.

In the manufacture of moulded items containing ligno-cellulosic materials, polyisocyanates are applied as binders by spraying the polyisocyanate composition onto the ligno-cellulosic material while it is being agitated in an enclosed mixer either of a single batch type or a continuous type. The polyisocyanate composition can be employed in the form of an aqueous emulsion. The treated ligno-cellulosic material is placed in a uniform layer between caul plates and thereafter pressed together under high pressure usually at a temperature between 140 and 230°C, to cure the resin and form the moulded cellulosic article. The article is removed by opening the press and removing the caul plates or platens. In the absence of an efficient release agent either applied internally with the polyisocyanate or externally on the metal caul plates or platens, the ligno-cellulosic materials adhere strongly to the metal surfaces.

When polyisocyanates are employed as the binding agent very high quality, uniformly bound articles are formed. However, the excellent adhesive properties offered by a polyisocyanate creates an offsetting disadvantage in that it causes severe sticking or binding of the ligno-cellulosic material to the metal surfaces which it contacts during the hot pressing stage. Most often the product is damaged in removing it from the press and much time is required to remove adhering cellulosic material from the surfaces of the press parts.

In carrying out an efficient commercial process either by a continuous or semi-continuous operation to produce the high moulded article offered by the use of polyisocyanates it is mandatory that the press equipment be used repeatedly at short cycle times to produce articles having uniform quality. Therefore, the problems associated with adhesion to the press parts must be essentially eliminated. Furthermore, the time required for cleaning the press parts surfaces to remove resinous material formed on the hot surfaces of the press parts due to thermal decomposition must be reduced to a minimum.

The use of mineral waxes as a mould release agent in combination with polyisocyanate has been proposed in EP 46014 and US 4431455. Surprisingly it has been found that further improvements can be made by employing a specific phosphate ester in combination with the mineral wax, which may be used as an external mould release agent, or by employing this combination in a polyisocyanate in which case it may be used as an internal mould release agent.

The polyisocyanate composition is a stable liquid which exhibits good binding and mould-release properties. The polyisocyanate composition is more stable than such a composition not comprising the phosphate ester. The invention is concerned with a composition comprising a mineral wax and a neutral ester of orthophosphoric acid having the general formula

$$(RO)_3PO$$

wherein either one or two of the R groups is a saturated alkyl group having 8-20 carbon atoms and one or two of said R groups is a benzyl, phenyl or an alkyl substituted benzyl or phenyl group wherein said substituted alkyl groups have 1-9 carbon atoms. Such a composition may be used as an external mould-release agent or as a composition which is to be combined with a polyisocyanate. Therefore the invention is also concerned with a composition comprising a polyisocyanate and the above composition.

US 4376089 and US 4257996 disclose the use of certain phosphate esters as mould release agents in wood-binding applications. Other references wherein certain types of phosphate ester have been disclosed as plasticizers and fire-retardants are US 3933669 and US 3841955.

Mineral wax, fossil wax or ozokerite is a wax like hydrocarbon mixture having a melting point in the range of 55-110°C. A preferred material is montan wax which is recovered by solvent extraction of lignite and comprises a wax portion and a resin portion. The wax component is a mixture of long chain esters (62-68 % by weight), long chain acids (22-26 % by weight), and long chain alcohols, ketones and hydrocarbons (7-15 % by weight). The resin portion is about 70 % by weight terpenes and poly-terpenes and 30 % by weight resinic acid, oxyresinic acid, polymerised esters of oxyresinic acid and asphalt. Depending upon its source, it has a melting point in the range of 82-90°C. It is soluble in carbon tetrachloride, benzene, chloroform and petroleum solvents.

The alkyl R groups in the general formula having 8-20 carbon atoms may be selected from n-octyl, isooctyl, 2-ethylhexyl, n-nonyl, decyl, 2-methyloctyl, 2-ethyloctyl, 3-ethylcyclohexyl, undecyl, hexadecyl, dodecyl, and nonadecyl. Aromatic substituents for R groups may be selected from phenyl and alkyl phenyl such as xylenyl, dimethylphenyl, ethylmethylphenyl, propylphenyl, isopropylphenyl methylisopropylphenyl, nonylphenyl, octylphenyl, biphenyl, benzylphenyl and similar benzyl substituents.

The phosphorate esters can be made by reacting phosphorus oxychloride by stepwise addition with benzyl alcohol or phenol derivatives and alkyl alcohol derivatives in the presence of base. Representative of such neutral esters of orthophosphoric acid are dioctyl cresyl phosphate, dicresyl octylphosphate, diphenyl decylphosphate, dibenzyl 2-ethylhexylphosphate, 2-ethylhexyl diphenyl phosphate, 2-ethylhexylphenyl phosphate, 2-ethylcyclohexyldi(methylbenzyl)phosphate, isodecyldicresyl phosphate, ethylphenyldioctyl phosphate, and the like. These phosphate derivatives are usually amber coloured or colourless, odourless liquids having a boiling point in the range of 400-600°C and are soluble in common organic solvents. Suitable liquid polyisocyanates for use in the compositions of the invention include diisocyanates and high functionality isocyanates particularly aromatic polyisocyanates. Mixtures of polyisocyanates may be used such as the crude mixtures of di-and higher functionality polyisocyanates produced by phosgenation of aniline/formaldehyde condensates, known as crude MDI. The organic polyisocyanates may be isocyanate-ended prepolymers made by reacting an excess of a diiso-cyanate or higher functionality polyisocyanate with a polyol.

Especially suitable are water-emulsifiable organic polyisocyanates like those described in UK 1444933. A specific example of such a water-emulsifiable organic polyisocyanate is prepared by reacting three parts of methoxy polyethylene glycol (molecular weight 650) with 97 parts of crude MDI having an NCO content of 30 % and containing approximately 50 % of diphenylmethane diisocyanates with the remainder being polymethylene polyphenyl polyisocyanates of higher functionality.

The phosphate esters act as a compatibilizer for the mineral wax and the polyisocyanate. Another object of the invention is to provide for a process for binding ligno-cellulosic material which comprises bringing said material in contact with a polyisocyanate composition according to the present invention and subsequently allowing said material to bind. Such binding processes are commonly known in the art. The phosphate ester compositions of the invention may be prepared by mixing the components together preferably at elevated temperature.

In blending the phosphate esters with mineral wax and polyisocyanate, it may be necessary to provide heat and agitation to speed up the formation of a free flowing liquid. For example, a solution containing liquid polyisocyanate can be made by adding 10 parts by weight phosphate ester, 10 parts by weight montan wax with 80 parts emulsifiable polyisocyanate blend and thereafter heating to a temperature of 130°C for 2 hours in order to provide a free flowing liquid.

The composition comprising phosphate ester and mineral wax is made by blending the two ingredients at elevated temperature to form a liquid. The blend may then be diluted with a sprayable solvent to be used as a coating for press parts to act as an external mould release composition. The relative amount of the phosphate ester and the mineral wax in the compositions according to the invention may range from 1:10 to 10:1 and preferably from 1:3 to 3:1. The amounts of phosphate ester and mineral wax in the polyisocyanate composition both may range from 2-20 and preferably from 5-15 parts by weight calculated on the whole composition.

In particle board manufacture the ligno-cellulosic material and polyisocyanate may be conveniently mixed by spraying the polyisocyanate composition containing wax and phosphate ester on the ligno-cellulosic material while it is being agitated in a closed mixer either of the single batch or continuous operating type. The polyisocyanate composition may be employed as such or in the form of a solution in an organic solvent but preferably it is employed in the form of an aqueous emulsion. Suitable emulsions may be prepared by stirring the polyisocyanate composition with water in the presence of an emulsifying agent unless the polyisocyanate itself is of the emulsifiable type.

The ligno-cellulosic material after treatment with polyisocyanate composition is placed on caul plates made of aluminium or steel which serve to carry the "furnish" into the press where it is compressed to the desired extent usually at a temperature between 140 and 230°C. When using the polyisocyanate compositions of the invention containing phosphate ester and mineral wax, adhesion which takes place between the compressed particle and the metal surfaces of the press is negligible. At the start of a manufacturing run, it is helpful, but not essential to condition the press plates by spraying their surfaces with a blend containing phosphate ester and mineral wax in a solvent solution. The conditioned press plates may then be used many times in the process of the invention without further treatment. Particle board for example is manufactured on a continuous basis by depositing the polyisocyanate treated ligno-cellulosic material on conveyor belts for transfer to the press.

While the process is particularly suitable for the manufacture of particle board known extensively as chipboard and will be largely used for such manufacture, the process may not be regarded as limited in this respect and can also be used in the manufacture of medium density fiberboard, waferboard, mouldings by the Werzalite process and plywood. Thus the ligno-cellulosic material used can include woodchips, wood fibers, shavings, veneers, wood wool, cork, bark, sawdust and like waste products of the wood working industry as well as other materials having a ligno-cellulosic basis such as paper, bagasse, straw, flax, sisal, hemp, rushes, reeds, rice hulls, grass, nutshells and the like. Additionally, there may be mixed with the ligno-cellulosic materials other particulate or fibrous materials such as glass fiber, mica, textile waste such as plastic fibers and fabrics.

When the polyisocyanate composition is applied to the cellulosic material, the weight ratio of polyisocyanate/ligno-cellulosic material will vary depending on the bulk density of the cellulosic material employed. Therefore, the polyisocyanate compositions may be applied in such amounts to give a weight ratio of polyisocyanate/ligno-cellulosic material in the range of 0.1:99.9 - 20:80 and preferably in the range of 0.5:99.5 - 7.0:93.

Other factors effecting the concentration of phosphate ester and mineral wax also may vary depending upon the density of the cellulose material employed, its surface area, the temperature and pressure of the operation, and the metal employed in the press plates.

Normally, the operation is carried out employing either aluminium or steel plates at a temperature of 140 - 230°C at pressures up to 25 MPa. Sheets and moulded articles made under these conditions are uniformly excellent in mechanical properties and may be employed in any structural application where such articles are customarily used.

The invention is better understood with reference to the following examples wherein all proportions expressed are in parts by weight unless otherwise specified.

## Example 1

A composition is prepared by mixing 7.5 parts montan wax and 12.5 parts 2-ethylhexyl diphenyl phosphate at a temperature of 95°C with mild stirring for a period of one hour.

## Example 2

50 parts of the composition of Example 1 is mixed with 50 parts of low boiling petroleum ether at 40°C to form a clear solution. The material was then cooled and filtered to remove insolubles and stored for use as an external mould release spray.

Coatings of this material are applied to the heated metal surfaces of press parts at concentrations ranging from 0.5 - 1 gram per square meter based on the weight of the wax and phosphate ester deposited after solvent evaporation. Over 100 releases can be obtained from steel surfaces coated with this external mould release spray when polyisocyanate containing 19 parts by weight of the composition of Example 1 is used as the binder.

## Example 3

An emulsifiable isocyanate is prepared by reacting 3 parts of methoxy polyethylene glycol (molecular weight 650) with 97 parts of crude MDI having an NCO content of 30 % and containing approximately 50 % of diphenylmethane diisocyanates, the remainder being polymethylene polyphenyl polyisocyanates of higher functionality.

To 80 parts of this emulsifiable isocyanate at 90°C, 20 parts of the composition of Example 1 is charged and stirred at 90-95°C for approximately 1 hour and then cooled with stirring to below 50°C. The product is a liquid which when used as a binder (aqueous emulsion) in the preparation of particle board gives over 50 releases from caul plates treated as described in Example 2.

## Example 4

The emulsifiable polyisocyanate composition prepared in Example 3 is emulsified in water in the proportion of 3.12 parts of polyisocyanate composition to 10 parts of water. This aqueous emulsion is applied to a 50/50 blend of 10:25 mesh pine/spruce wood chips having a moisture content of 2 % in weight ratios of 9-15 parts wood chips/1 part emulsion and the resultant mixture is thereafter aged and used in the manufacture of particle boards.

For the core material, 13.125 parts of the emulsified isocyanate is applied to 102 parts of pine/spruce wood which has a particle size of 5 mesh.

A series of boards are prepared from 66 % core material and 33 % surface material. Thus half of the surface material is sprinkled onto an aluminium former plate, this is followed by the core material and the remainder of the surface material. The resultant "furnish" is then hand pressed to form a "cake" which is introduced into the press. Steel spacers are placed on the aluminium plate and the steel plate placed on top of the cake. Pressure is applied at a press temperature of 175°C until both plates are in contact with the spacers. Pressures of 3-5 MPa are maintained for a pressing time of 15 seconds per millimetre board thickness. This process can be reproduced in the press using the same equipment pretreated with the spray of Example 2 continuously without experiencing serious adhesion or resin build up on the press plate surfaces.

## Example 5

In order to simulate the pressing of plywood under severe sticking conditions, one surface of a sheet of southern pine veneer measuring 15cm x 15 cm x 3 mm was coated with approximately 3 % by weight based on the weight of the veneer of the polyisocyanate of Example 3.

The release agent of Example 2 was applied to one surface of a 15 cm x 15 cm x 1.27 mm square of steel shim stock and placed in contact with the isocyanate covered portion of the veneer. The steel plate in contact with veneer was precoated with the spray solution of Example 2 to obtain 2 % of the release agent based on the dry weight of veneer wood as a surface coating. The veneer and shim stock were placed in the center of two steel plates measuring 30 cm x 30 cm previously coated with a commercially available mould release agent for hot moulds provided by Miller-Stephenson as MS-136 (blend of waxes and fluoropolymers). The assembly was then placed into the press where it was heated to a temperature of 176°C at a pressure of 25 MPa for 6 minutes. Upon completion of the press cycle the steel plates were removed and the veneer/steel shim stock system is permitted to cool. After cooling the steel shim stock was carefully removed from the veneer. The shim stock was retained for study of the fracture surface and the veneer discarded. The amount of surface area retaining adhered veneer wood is measured and compared with different mould release coatings at an equivalent level.

| Comparative Mould Release | % Area Having Wood Adhering to Surface of Shim Stock |
|---|---|
| Bare Metal (none) | 95 |
| Butyl Stearate | 100 |
| Octyl Oleate | 70 |
| Octyl diphenyl phosphate | 100 |
| Dodecyl benzene sulfonic acid (sodium salt) | 35 |
| Montan wax/Octyl oleate | 85 |
| Montan wax/2-ethylhexyl diphenyl | 5 |
| Montan wax | 2 |

## Claims

1. Composition comprising a mineral wax and a neutral ester of orthophosphoric acid having the general formula

$$(RO)_3PO$$

wherein either one or two of the R groups is a saturated alkyl group having 8-20 carbon atoms and one or two of said R groups is a benzyl, phenyl or an alkyl substituted benzyl or phenyl group wherein said substituted alkyl groups have 1-9 carbon atoms.

2. Composition comprising a polyisocyanate and a composition according to claim 1.

3. Composition according to claims 1 and 2 wherein the weight ratio of said phosphate ester to said mineral wax ranges from 1:10 to 10:1.

4. Composition according to claims 1 and 2 wherein said mineral wax is montan wax.

5. Composition according to claims 1 and 2 wherein said phosphate ester is 2-ethylhexyl diphenylphosphate.

5

6. A composition according to claim 2 wherein said polyisocyanate is water dispersible.

7. A composition according to claim 2 wherein the amount of the phosphate ester and the mineral wax both ranges from 2-20 parts by weight calculated on the whole composition.

8. Process for binding ligno-cellulosic material which comprises bringing said material in contact with a composition comprising a polyisocyanate, a mineral wax and a neutral ester of orthophosphoric acid, said phosphate ester having the formula

$$(RO)_3PO$$

wherein either one or two of the R groups is a saturated alkyl group having 8-20 carbons atoms and one or two R groups is benzyl, phenyl or an alkyl substituted phenyl or benzyl group wherein said substituted alkyl groups have 1-9 carbon atoms.

**European Patent Office**

## EUROPEAN SEARCH REPORT

**Application Number**

EP 91 30 4852

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 046 014 (IMPERIAL CHEMICAL INDUSTRIES PLC) * Claims * | 1-8 | C 08 K 5/523 C 08 L 75/04 C 08 L 91/08 |
| D,Y | US-A-4 257 996 (W.J. FARRISSEY, Jr. et al.) * Column 4, line 61 - column 5, line 10; claims * | 1-8 | B 29 C 33/60 // (C 08 L 75/04 C 08 L 91:08 ) B 29 K 103:00 |
| A | DATABASE WPIL, accession no. 85-245938, Derwent Publications Ltd, London, GB; & JP-A-60 161 489 (NIPPON KOKAN K.K.) 23-08-1985 * Abstract * | | |

**TECHNICAL FIELDS SEARCHED (Int. Cl.5)**

C 08 K
C 08 L
B 29 C

The present search report has been drawn up for all claims

| Place of search | Date of completion of the search | Examiner |
|---|---|---|
| THE HAGUE | 11-09-1991 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document